# EUROPÄISCHE PATENTSCHRIFT

(11) **EP 0 655 464 B1**
(45) Veröffentlichungstag und Bekanntmachung des Hinweises auf die Patenterteilung: **04.02.1998**
(21) Anmeldenummer: 94118125.7
(22) Anmeldetag: 17.11.1994
(51) Int. Cl.: C08F 2/24, C09D 157/00, C09J 157/00

(54) **Verfahren zur Herstellung von Schutzkolloid-stabilisierten Dispersionen**
Process for preparing dispersions stabilised with protective colloids
Procédé de préparation de dispersions stabilisées avec des colloides protecteurs

(30) Priorität: 29.11.1993 DE 4340563
(43) Veröffentlichungstag der Anmeldung: 31.05.1995
(73) Patentinhaber: Clariant GmbH, 65929 Frankfurt am Main (DE)
(72) Erfinder: Gerharz, Bettina, Dr., D-55118 Mainz (DE); Kroggel, Matthias, Dr., D-65779 Kelkheim (DE)

(56) Entgegenhaltungen:
- DE-C- 849 006

## Beschreibung

Die Erfindung betrifft ein Verfahren zur Herstellung von Schutzkolloid-stabilisierten Dispersionen unter Verwendung Sulfonatgruppen-haltiger Polyvinylacetale als Schutzkolloid sowie die Verwendung derartiger Dispersionen in wäßrigen Bindemittelsystemen.

Dispersionen werden in vielen Anwendungsbereichen eingesetzt, beispielsweise im Klebstoffsektor, im Baustoffsektor, für Innen- und Glanzfarben, Außenanstrichfarben und Holzleime. Bei Dispersionen unterscheidet man zwischen Emulgator-stabilisierten und Schutzkolloid-stabilisierten Systemen. Weiterhin muß zwischen ionogen stabilisierten und nichtionogen stabilisierten Dispersionen unterschieden werden.

Für eine Vielzahl von Verarbeitungsverfahren im Anwenderbereich müssen die eingesetzten Dispersionen extrem scherstabil sein. Diesen Anforderungen genügen Emulgator-stabilisierte Dispersionen in der Regel nicht. Aus diesem Grund werden Schutzkolloid-stabilisierte oder zumindest zusätzlich Schutzkolloid-stabilisierte Dispersionen verwendet.

Schutzkolloid-stabilisierte Dispersionen sind bekannt aus J. Appl. Polym. Sci., Vol. 40, 333-343 (1990) sowie aus Polym. Mat. Sci. & Eng. 51, 172 (1984). Ein Verfahren zur Emulsionspolymerisation von ethylenisch ungesättigten Monomeren in Gegenwart von hydrophob-modifizierter Hydroxyethylcellulose ist in EP-A-0 334 354 beschrieben. Vor allem in Reinacrylatdispersionen neigen hydrophob-modifizierte Hydroxyethylcellulosen jedoch zur Partikelaggregation und Destabilisierung (J. Appl. Polym. Sci., Vol 40, 333-343, 1990). Hohe Pfropfraten bei der Polymerisation von Acrylatmonomeren auf Celluloseethern führen zu mangelhafter Filmklarkeit und Dilatanz der Dispersion (J. Coat. Techn., Vol. 61 (779), 49, 1989).

Ein weiterer Nachteil der bekannten Schutzkolloid-stabilisierten Dispersionen besteht darin, daß die gewünschte Verarbeitungsviskosität nachträglich durch Zusatz von Verdickern, Füllstoffen oder auch durch Verdünnen eingestellt werden muß.

Problematisch ist dann auch häufig die Stabilität derartig eingestellter Dispersionen. Um Koagulation oder Absetzen der Dispersionen zu vermeiden, müssen in Abhängigkeit von den eingesetzten Zusatzstoffen jedesmal spezielle Rezepturen erarbeitet werden.

Aufgabe der vorliegenden Erfindung war demzufolge, ein Verfahren zur Herstellung von Dispersionen mit möglichst hoher Scherstabilität bereitzustellen, deren Rheologie in einem möglichst weiten Bereich ohne die oben aufgeführten Nachteile auf einfachem Weg einstellbar ist.

Es wurde nun gefunden, daß sich Dispersionen durch Zusatz von Sulfonatgruppen-haltigen Polyvinylacetal-Schutzkolloiden während des Polymerisationsverfahrens herstellen lassen, deren Viskosität sich über den pH-Wert in weiten Grenzen einstellen läßt.

Die vorliegende Erfindung betrifft also ein Verfahren zur Herstellung von Schutzkolloid-stabilisierten Dispersionen unter Verwendung Sulfonatgruppen-haltiger Polyvinylacetale als Schutzkolloid bei der Dispersonsherstellung gegebenenfalls in Kombination mit zusätzlichen Emulgatoren oder weiteren Schutzkolloiden, dadurch gekennzeichnet, daß die Sulfonatgruppen-haltigen Polyvinylacetale Acetale Sulfonatgruppen-haltiger Polyvinylalkohole sind.

Die bei der Dispersionsherstellung einsetzbaren Sulfonatgruppen-haltigen Polyvinylacetale sind beispielsweise in den Patentanmeldungen EP-A-0 594 026, DD-A-0 222 882 und EP-A-0 368 832 beschrieben. Bevorzugt ist die Verwendung von Sulfonatgruppen-haltigen Polyvinylacetalen, die in der Patentanmeldung EP-A-0 594 026 beschrieben sind. Geeignete Polyvinylacetale besitzen vorzugsweise ein Molekulargewicht (M_{w}) von 1.000 bis 300.000 g/mol, insbesondere 2.500 bis 175.000 g/mol.

Die erfindungsgemäß einzusetzenden Schutzkolloide sind durch Acetalisierung Sulfonatgruppen-haltiger Polyvinylalkohole mit Aldehyden nach literaturbekannten Verfahren herstellbar. Als Aldehyde für die Acetalisierung eignen sich aliphatische, cycloaliphatische und aromatische Aldehyde, mit bis zu 20 Kohlenstoffatomen, bevorzugt ist die Verwendung von Acetaldehyd, Propionaldehyd, i-Nonanal, Hydroxyalkanalen mit 2 bis 8 Kohlenstoffatomen und Benzaldehyd, besonders bevorzugt ist der Einsatz von Butyraldehyd.

Die erfindungsgemäß einzusetzenden Sulfonatgruppen-haltigen Polyvinylacetale enthalten bis zu 70 mol-% Vinylalkoholeinheiten, bis zu 84 mol-% Vinylacetaleinheiten, bis zu 20 mol-% Sulfonateinheiten (-SO₃⁻) und bis zu 20 mol-% Vinylacetaleinheiten, bevorzugt sind Gehalte an Vinylalkoholeinheiten zwischen 25 und 70 mol-%, an Vinylacetaleinheiten zwischen 35 und 70 mol-%, an Sulfonatgruppen zwischen 1 und 15 mol-% und an Vinylacetateinheiten zwischen 0 und 3 mol-%. Darüber hinaus können die erfindungsgemäßen Schutzkolloide bis zu 20 mol-% anderer Monomereinheiten enthalten, beispielsweise Styrol und Styrolderivate, ethylenisch ungesättigte Carbonsäuren, deren Ester, deren Amide oder deren Anhydride mit bis zu 25 Kohlenstoffatomen, Vinylester mit bis zu 20 Kohlenstoffatomen, n- und i-Alkylvinylester, n-Vinylpyrrollidone und deren Derivate, Acrylnitril, Olefine, Vinylether, bevorzugt Vinylester mit bis zu 15 Kohlenstoffatomen.

Bei der Dispersionsherstellung werden die Schutzkolloide erfindungsgemäß in einer Menge von bis zu 25 Gew.-%, bezüglich der eingesetzten Monomere, verwendet, bevorzugt sind Mengen von 1 bis 15 Gew.-%, insbesondere Mengen von 1 bis 8 Gew.-%.

Die erfindungsgemäßen Schutzkolloide können gegebenenfalls in Kombination mit anderen Schutzkolloiden und/oder Emulgatoren eingesetzt werden. Prinzipiell sind alle allgemein bei der Emulsionspolymerisation einsetzbaren Schutzkolloide in Kombination mit den erfindungsgemäßen Schutzkolloiden einsetzbar, vorausgesetzt, daß sie mit den erfindungsgemäßen Schutzkolloiden verträglich sind.

In Kombination mit den erfindungsgemäßen Schutzkolloiden eignen sich beispielsweise Cellulosederivate, Polyvinylpyrrolidon, Polyacrylsäuren oder Polyacrylamid. Diese Schutzkolloide werden in einer Menge bis zu 5 Gew.-%, bezogen auf die eingesetzten Monomere, zusätzlich verwendet. Zusätzliche Emulgatoren können in Mengen von 0,1 bis 1,5 Gew.-% verwendet werden. Verwendung finden ionische und nichtionische Emulgatoren. Als anionische Emulgatoren eignen sich insbesondere Schwefelsäureester von Fettalkoholen, beispielsweise Laurylsulfat, Sulfierungsprodukte von oxalkylierten, insbesondere oxethylierten, zumeist 8 bis 12 Kohlenstoffatome im Alkylrest enthaltenden Alkylphenolen, wasserlösliche Alkalisalze von Fettsäuren und sulfonierte und alkylierte Biphenylether. Als nichtionische Emulgatoren können beispielsweise oxalkylierte, vorzugsweise oxethylierte, Fettalkohole, Fettamine, Fettsäureamide und/oder zumeist 8 bis 12 Kohlenstoffatome in den Alkylgruppen enthaltende Monoalkylphenole, die 5 bis 30, insbesondere 10 bis 25 Ethylenoxid-Einheiten im Molekül enthalten, eingesetzt werden.

Die erfindungsgemäßen Schutzkolloide werden bei der Dispersionsherstellung in Form einer wäßrigen Lösung, einer wäßrigen Emulsion oder Suspension im Reaktionsgefäß vorgelegt, können aber auch ganz oder teilweise während der Dispersionsherstellung dem Reaktionsansatz kontinuierlich oder diskontinuierlich zugesetzt werden.

Die Disperionsherstellung findet statt, indem man dem im Reaktionsgefäß ganz oder teilweise vorgelegten Schutzkolloid, Schutzkolloid-Gemisch oder Schutzkolloid-Emulgator-Gemisch, ethylenisch ungesättigte Monomere bei der gewünschten Reaktionstemperatur kontinuierlich, diskontinuierlich oder batchweise zusetzt. Dabei können alle radikalbildenden Polymerisationsinitiatoren in den üblichen Mengen eingesetzt werden. Geeignete Initiatoren sind beispielsweise Alkali- und Ammoniumsalze der Peroxysäuren, wie Kalium-, Natrium- und Ammoniumpersulfat, sowie Redoxkatalysatoren, beispielsweise Kombinationen aus Ammoniumpersulfat und Ammoniumhydrogensulfat, oder Wasserstoffperoxid und Ascorbinsäure sowie tert.-Butylperoxid und Natrium-Formaldehyd-Sulfoxylat. Weiterhin können auch organische Peroxide, Percarbonate und Azoverbindungen eingesetzt werden, vorzugsweise Dibenzoylperoxid, Azobisisobutyronitril, tert.-Butylperoxydiethylacetat oder tert.-Butylperoxy-2-ethylhexanoat. Die Menge der eingesetzten Initiatoren liegt bei 0,1 bis 2, vorzugsweise bei 0,2 bis 1 Gew.-%, bezogen auf die Monomere. Die aufgeführten Initiatoren können auch in Mischung verwendet werden.

Prinzipiell sind bei der Dispersionsherstellung alle ethylenisch ungesättigten radikalisch polymerisierbaren Monomeren einsetzbar, wie sie üblicherweise für die Herstellung von Kunststoffdispersionen eingesetzt werden. Geeignete Monomere sind beispielsweise Carbonsäurevinylester mit 3 bis 20 Kohlenstoffatomen, insbesondere Vinylacetat, Vinylpropionat und Carbonsäurevinylester mit 9 bis 11 Kohlenstoffatomen in der Carbonsäurekomponente, weiterhin N-Vinylpyrrolidon und dessen Derivate, ethylenisch ungesättigte Carbonsäuren, deren Ester, deren Amide oder deren Anhydride, weiterhin α-Olefine, insbesondere Ethylen und Propylen sowie Acrylnitril. Besonders bevorzugt ist die Verwendung ethylenisch ungesättigter Carbonsäuren, insbesondere von Acryl- und Methacrylsäure, weiterhin von ethylenisch ungesättigten Carbonsäureestern, insbesondere von Acryl- und Methacrylsäureestern mit 1 bis 12 Kohlenstoffatomen im Alkoholrest. Der Alkoholrest der Ester kann aus linearen oder verzweigten Alkylketten, Cycloaliphaten oder Aromaten bestehen, die zusätzlich mit Hydroxylgruppen, Halogenatomen oder Epoxidgruppen modifiziert sein können. Besonders bevorzugt ist auch der Einsatz von Styrol und Styrolderivaten.

Die Zudosierung der Monomeren kann in Form von Monomermischungen oder in Form von Monomeremulsionen erfolgen, wobei die bei der Dispersionsherstellung eingesetzten Monomeren im Reaktionsgefäß ganz oder teilweise vorgelegt werden oder ganz oder teilweise während der Polymerisation kontinuierlich oder diskontinuierlich in Reinform oder in Mischung zudosiert werden. Im Falle von Monomeremulsionen können diese Schutzkolloid- und/oder Emulgator-stabilisiert sein, zur Stabilisierung der Monomeremulsionen finden die bereits aufgezählten Emulgatoren und Schutzkolloide Verwendung. Die aufgeführten Initiatorsysteme können bei der Dispersionsherstellung ganz oder teilweise im Reaktionsgefäß vorgelegt werden, ganz oder teilweise mit der Monomeremulsion zudosiert werden oder ganz oder teilweise parallel zur Monomermischung zudosiert werden.

Verfahren für die Herstellung von Kunststoffdispersionen sind allgemein bekannt. Grundsätzlich können alle literaturbekannten Herstellungsverfahren für die Synthese von Dispersionen unter Verwendung der erfindungsgemäßen Schutzkolloide eingesetzt werden. Üblicherweise wird die Polymerisation in einem Bereich zwischen 40 bis 140 °C gegebenenfalls unter Druck durchgeführt, bevorzugt ist ein Temperaturbereich von 60 bis 90 °C.

Der erfindungsgemäße Einsatz der Sulfonatgruppen-haltigen Polyvinylacetale während des Emulsionspolymerisationsverfahrens führt zumindest teilweise zu einer Pfropfung der Sulfonatgruppen-haltigen Polyvinylacetale mit den eingesetzten Monomeren. Diese Modifikation der Sulfonatgruppen-haltigen Polyvinylacetale beeinflußt maßgeblich die Eigenschaften der Dispersion, insbesondere die Abhängigkeit der Viskosität der Dispersion vom pH-Wert.

Ein Gegenstand der Erfindung sind daher auch wäßrige Dispersionen mit pH-Wert-abhängiger Viskosität, enthaltend Sulfonatgruppen-haltigen Polyvinylacetale als Schutzkolloide, mindestens ein Latexpolymer, hergestellt durch Emulsionspolymerisation in Gegenwart des Sulfonatgruppen-haltigen Polyvinylacetals das ein Acetal eines Sulfonatgruppen-haltigen Polyvinylalkohols ist, gegebenenfalls weitere Schutzkolloide sowie gegebenenfalls Emulgatoren, wobei vorzugsweise zumindest ein Teil der Sulfonatgruppen-haltigen Polyvinylacetale durch die zur Herstellung des Latexpolymers eingesetzten Monomere gepfropft ist.

Die mittlere Teilchengröße der Latexpartikel der Dispersion liegt zwischen 100 und 1000 nm, vorzugsweise 150 und 500 nm. Der Feststoffgehalt der Dispersion liegt im Bereich von 30 bis 70 %, vorzugsweise von 40 bis 60 %.

Die Viskosität der erfindungsgemäßen Dispersionen ist durch Einstellung des pH-Wertes der Dispersionen im nicht-Newtonischen-Fließbereich über mehrere Dekaden variierbar, so daß die Basis-Dispersionen an eine Vielzahl unterschiedlicher Anwendungsbereiche angepaßt werden können. Wird der pH-Wert einer derartigen Basisdispersion zu niedrigen pH-Werten verschoben, nimmt die Viskosität der Dispersion ab, wird der pH-Wert der Basis-Dispersion zu höheren Werten hin verschoben, so steigt die Viskosität an. Dabei kann in einem pH-Bereich zwischen 2 und 12, vorzugsweise 3 und 10, in Abhängigkeit von der Art der Dispersion, eine Viskosität im Bereich von 10 mPa·s bis 100 Pa·s eingestellt werden. Der Anwender hat somit die Möglichkeit, das spezifische Viskositätsprofil für seine spezielle Anwendung auf einfachem Wege individuell einzustellen. Weiterhin lassen sich auf diesem Wege Dispersionen mit extrem hoher Viskosität, vorzugsweise > 25 Pa·s herstellen.

Die Dispersionen zeigen überraschenderweise unabhängig vom pH-Wert ein ausgesprochen strukturviskoses Verhalten. Sie besitzen eine hohe Scherviskosität, vorzugsweise > 25 Pa·s, und eine gute Lagerbeständigkeit.

Ein weiterer Gegenstand der Erfindung ist die Verwendung der erfindungsgemäß hergestellten Dispersionen in wäßrigen Bindemittelsystemen.

Aufgrund des beschriebenen Eigenschaftsprofils eignen sich Dispersionen mit den erfindungsgemäßen Schutzkolloiden insbesondere als Rheologiemodifizierungsmittel für die unterschiedlichsten Systeme, insbesondere für wäßrige Bindemittelsysteme. Die Verträglichkeit kann über das Schutzkolloid/Emulgatorsystem für jedes System maßgeschneidert werden.

Die erfindungsgemäßen Dispersionen, insbesondere Reinacrylatdispersionen, die Sulfonatgruppen-haltige Polyvinylacetale als Schutzkolloide enthalten, eignen sich insbesondere auch zur Herstellung klarer Dispersionsfilme. Weiterhin induziert das verwendete Schutzkolloidsystem gute Haftung der Dispersionen auf den unterschiedlichsten Materialien. Aus diesem Grund eignen sich Dispersionen, die mit den erfindungsgemäßen Schutzkolloiden hergestellt werden insbesondere für die Beschichtung und Verklebung von Glas, Metallen, Holz, Papier, Naturfasern, mineralischen Materialien und Polymersubstraten. Aufgrund der stark Scherratenabhängigen und zudem über den pH-Wert einstellbaren Viskositäten lassen sich die Dispersionen hervorragend in Anwendungs- und Verarbeitungsbereichen einsetzen, die während des Verarbeitungsvorgangs deutlich niedrigere Viskositäten erfordern, beispielsweise in spritzbaren Antidröhnmassen und als Bindemittel für feste Farben und als Bindemittel für Klebestifte auf wäßriger Basis.

### Beispiele

Die in den Beispielen angegebenen Teile und Prozente beziehen sich, wenn nicht anders angegeben, auf das Gewicht. Der Begriff Acetal-Einheiten steht für den folgende Substituenten: 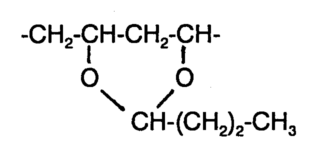 (2-n-Propyl-4-methylenyl-1,3-dioxan-6-yl-)

### Viskositätsbestimmung nach Methode 1:

Viskosität einer 10 %igen ethanolischen Lösung, ermittelt im Höppler-Viskosimeter bei 20 °C

### Viskositätsbestimmung nach Methode 2:

Viskosität der Dispersion ermittelt mit einem Haake-Rotationsviskosimeter (Rheomat VT 500) bei einem Schergefälle von D = 17,93 s⁻¹

Die Teilchengröße und die Teilchengrößenverteilung wurden durch Photonen-Korrelationsspektroskopie mittels eines ALV-Korrelators ermittelt. Die angegebene Teilchengröße entspricht dem hydrodynamischen Teilchendurchmesser.

### Beispiel 1 :

### Zunächst werden bereitgestellt:

### Monomeremulsion hergestellt aus:

- 430 g: Wasser
- 15 g: ®Hostapal BV 50 %ig (Natriumsalz eines Alkylarylpolyglykolethersulfats)
- 88 g: Methylmethacrylat
- 352 g: 2-Ethylhexylacrylat
- 220 g: n-Butylacrylat
- 15 g: Methacrylsäure
- 3,4 g: Ammoniumpersulfat

Initiatorlösung, bestehend aus
- 0,35 g: Ammoniumpersulfat,
- 10 g: Wasser.

In einem 2l-Kolben werden vorgelegt
370 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Feststoffgehalt der Dispersion: | 23,7 %), |

7,5 g ®Hostapal BV (50 %ig),
30 g Monomeremulsion.

Die Vorlage wird im Reaktionsgefäß unter Rühren bei Umdrehungszahlen von 100-250 U/min auf eine Temperatur von 80-85 °C aufgeheizt. Bei einer Innentemperatur von 50-55 °C wird die Initiatorlösung zugegeben. Nachdem die Innentemperatur 80 °C erreicht hat, wird mit der Dosierung der restlichen Monomeremulsion begonnen. Die Dosierung der Monomeremulsion erfolgt gleichmäßig über einen Dosierzeitraum von 3,5 h. Die Innentemperatur sollte während des Dosierens 82-84 °C betragen bei einer Außentemperatur von 85-86 °C. Die Nachreaktionszeit beträgt 1,5 h.

### Analysendaten der erhaltenen Dispersion:

| | |
|---|---|
| Feststoffgehalt: | 51,7 % |
| Teilchengröße (TG): | 225 nm |
| TG-Verteilung: | 1,61 |
| pH-Wert: | 3,8 |
| Viskosität (Methode 2): | 2,7 Pa·s |

### Beispiel 2 :

### Zunächst werden bereitgestellt:

Monomeremulsion, hergestellt aus
430 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Viskosität (Methode 1): | 58,5 mPa·s |
| Feststoffgehalt der Dispersion: | 23,7 %), |

15 g ®Hostapal BV (50 %ig),
88 g Methylmethacrylat,
352 g 2-Ethylhexylacrylat,
220 g n-Butylacrylat,
15 g Methacrylsäure,
3,4 g Ammoniumpersulfat,

Initiatorlösung, bestehend aus
- 0,35 g: Ammoniumpersulfat,
- 10 g: Wasser.

In einem 2l-Kolben werden vorgelegt
370 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Viskosität (Methode 1): | 58,5 mPa·s |
| Feststoff der Dispersion: | 23,7 %), |

7,5 g ®Hostapal BV (50 %ig),
30 g Monomeremulsion.

Die Fahrweise der Polymerisation entspricht der in Beispiel 1 beschriebenen.

### Analysendaten der erhaltenen Dispersion:

| | |
|---|---|
| Feststoffgehalt: | 52,7 % |
| Teilchengröße (TG): | 200 nm |
| TG-Verteilung: | 2,01 |
| pH-Wert: | 4,6 |
| Viskosität (Methode 2): | 24,5 Pa·s |

### Beispiel 3 :

### Zunächst werden bereitgestellt:

Monomermischung, hergestellt aus
- 72 g: Methylmethacrylat,
- 290 g: 2-Ethylhexylacrylat,
- 180 g: n-Butylacrylat,
- 15 g: Methacrylsäure,
- 3,4 g: Ammoniumpersulfat,

Initiatorlösung I, bestehend aus
- 0,35 g: Ammoniumpersulfat,
- 10 g: Wasser,

Initiatorlösung II, bestehend aus
- 3,4 g: Ammoniumpersulfat,
- 20 g: Wasser.

In einem 2l-Kolben werden vorgelegt
800 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 73,3 % |
| Vinylalkohol-Einheiten: | 18,9 % |
| Vinylacetat-Einheiten: | 1,2 % |
| Natrium-Ethensulfonat-Einheiten: | 6,6 % |
| Viskosität (Methode 1): | 69,0 mPa·s |
| Feststoffgehalt der Dispersion: | 22,8 %), |

30 g Monomermischung.

Die Vorlage wird im Reaktionsgefäß unter Rühren bei Umdrehungszahlen von 100-250 U/min auf eine Temperatur von 80-85 °C aufgeheizt. Bei einer Innentemperatur von 50-55 °C wird die Initiatorlösung zugegeben. Nachdem die Innentemperatur 80 °C erreicht hat, wird mit der Dosierung der Monomermischung begonnen. Parallel dazu wird die Initiatorlösung II dosiert. Die Dosierung der restlichen Monomermischung erfolgt gleichmäßig über einen Dosierzeitraum von 3,5 h. Die Innentemperatur sollte während des Dosierens 82-84 °C betragen bei einer Außentemperatur von 85-86 °C. Die Nachreaktionszeit beträgt 1,5 h.

### Analysendaten der erhaltenen Dispersion:

| | |
|---|---|
| Feststoffgehalt: | 54,1 % |
| Teilchengröße (TG): | 275 nm |
| TG-Verteilung: | 2,37 |
| pH-Wert: | 4,6 |
| Viskosität (Methode 2): | 32 Pa·s |

### Beispiel 4 :

### Zunächst werden bereitgestellt:

Monomeremulsion, hergestellt aus
- 430 g: Wasser,
- 15 g: ®Hostapal BV (50 %ig),
- 88 g: Styrol,
- 352 g: 2-Ethylhexylacrylat,
- 220 g: n-Butylacrylat,
- 15 g: Methacrylsäure,
- 3,4 g: Ammoniumpersulfat,

Initiatorlösung, bestehend aus
- 0,35 g: Ammoniumpersulfat,
- 10 g: Wasser.

In einem 2l-Kolben werden vorgelegt
370 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Viskosität (Methode 1): | 58,5 mPa·s |
| Feststoffgehalt der Dispersion: | 23,7 %), |

7,5 g ®Hostapal BV (50 %ig),
30 g Monomeremulsion.

Die Fahrweise der Polymerisation entspricht der im Beispiel 1 beschriebenen.

### Analysendaten der erhaltenen Dispersion:

| | |
|---|---|
| Feststoffgehalt: | 51,6 % |
| Teilchengröße (TG): | 250 nm |
| TG-Verteilung: | 2,13 |
| pH-Wert: | 4,0 |
| Viskosität (Methode 2): | 5,4 Pa·s |

### Beispiel 5 :

### Zunächst werden bereitgestellt:

Monomeremulsion, hergestellt aus
430 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Viskosität (Methode 1): | 58,5 mPa·s |
| Feststoffgehalt der Dispersion: | 23,7 %), |

140 g Methylmethacrylat,
220 g Ethylhexylacrylat,
180 g n-Butylacrylat,
15 g Acrylsäure,
3,4 g Natriumpersulfat,

Initiatorlösung, bestehend aus
- 0,35 g: Ammoniumpersulfat,
- 10 g: Wasser.

In einem 2l-Kolben werden vorgelegt
370 g einer wäßrigen Dispersion eines Natrium-Ethensulfonat-Einheiten enthaltenden Polyvinylbutyrals
(analytische Daten des Sulfonat-haltigen Polyvinylbutyrals:

| | |
|---|---|
| Acetal-Einheiten: | 74,1 % |
| Vinylalkohol-Einheiten: | 18,9 % |
| Vinylacetat-Einheiten: | 1,3 % |
| Natrium-Ethensulfonat-Einheiten: | 5,7 % |
| Viskosität (Methode 1): | 58,5 mPa·s |
| Feststoffgehalt der Dispersion: | 23,7 %, |

30 g Monomeremulsion.

Die Fahrweise der Polymerisation entspricht der unter Beispiel 1 beschriebenen.

### Analysendaten der erhaltenen Dispersion:

| | |
|---|---|
| Feststoffgehalt: | 54,9 % |
| Teilchengröße (TG): | 250 nm |
| TG-Verteilung: | 2,19 |
| pH-Wert: | 4,4 |
| Viskosität (Methode 2): | 29,1 Pa·s |

## Patentansprüche

1. Verfahren zur Herstellung von Schutzkolloid-stabilisierten Dispersionen unter Verwendung Sulfonatgruppen-haltiger Polyvinylacetale als Schutzkolloid bei der Dispersionsherstellung, gegebenenfalls in Kombination mit zusätzlichen Emulgatoren oder weiteren Schutzkolloiden, dadurch gekennzeichnet, daß die Sulfonatgruppen-haltigen Polyvinylacetale Acetale Sulfonatgruppen-haltiger Polyvinylalkohole sind.

2. Verfahren nach Anspruch 1, dadurch gekennzeichnet, daß die Sulfonatgruppen-haltigen Polyvinylacetale bis zu 70 mol-% Vinylalkoholeinheiten, bis zu 84 mol-% Vinylacetaleinheiten, bis zu 20 mol-% Sulfonateinheiten (-SO₃⁻) und bis zu 20 mol-% Vinylacetateinheiten enthalten.

3. Verfahren nach Anspruch 1, dadurch gekennzeichnet, daß die für die Acetalisierung der Polyvinylalkohole oder der Sulfonatgruppen-haltigen Polyvinylalkohole eingesetzten Aldehyde aliphatische, aromatische oder cycloaliphatische Aldehyde mit bis zu 20 Kohlenstoffatomen sind.

4. Verfahren nach Anspruch 1, dadurch gekennzeichnet, daß der für die Acetalisierung der Polyvinylalkohole eingesetzte Aldehyd Butyraldehyd ist.

5. Verfahren nach Anspruch 1, dadurch gekennzeichnet, daß die Sulfonatgruppen-haltigen Polyvinylacetale in Mengen von bis zu 25 Gew.-% bezüglich der bei der Dispersionsherstellung eingesetzten- Monomere verwendet werden.

6. Verfahren Anspruch 1, dadurch gekennzeichnet, daß die in Kombination mit den Sulfonatgruppen-haltigen Polyvinylacetalen zusätzlich einsetzbaren Emulgatoren in Mengen von bis zu 1,5 Gew.-% bezüglich der eingesetzten Monomere verwendet werden und diese Emulgatoren anionische oder nichtionische Emulgatoren sind.

7. Verfahren nach Anspruch 1, dadurch gekennzeichnet, daß die in Kombination mit den Sulfonatgruppen-haltigen Polyvinylacetalen zusätzlich einsetzbaren Schutzkolloide in Mengen von bis zu 5 Gew.-% bezüglich der eingesetzten Monomere verwendet werden.

8. Verfahren nach Anspruch 1, dadurch gekennzeichnet, daß die bei der Dispersionsherstellung einzeln oder gemischt eingesetzten Monomere aus Carbonsäurevinylestern mit 3 bis 20 Kohlenstoffatomen, aus N-Vinylpyrrolidon und dessen Derivaten, aus ethylenisch ungesättigten Carbonsäuren, deren Estern, deren Anhydriden oder deren Amiden, aus α-Olefinen, aus Acrylnitril, aus Styrol oder Styrol-Derivaten bestehen.

9. Verfahren nach Anspruch 8, dadurch gekennzeichnet, daß die bei der Dispersionsherstellung eingesetzten Monomere aus Acryl- oder Methacrylsäureestern mit 1 bis 12 Kohlenstoffatomen im Alkohol-Rest bestehen und der Alkohol-Rest der Ester aus linearen oder verzweigten Alkylketten, cycloaliphatischen oder aromatischen Resten besteht, die gegebenenfalls zusätzlich mit Hydroxylgruppen, Halogenatomen oder Epoxidgruppen modifiziert sind.

10. Verfahren nach Anspruch 1, dadurch gekennzeichnet, daß die bei der Dispersionsherstellung einsetzbaren Initiatoren in Mengen von bis zu 2 Gew.-% bezüglich der verwendeten Monomeren eingesetzt werden und aus Alkali- und Ammoniumsalzen der Peroxysäuren, Redoxkatalysatoren oder organischen Peroxiden, organischen Azoverbindungen oder organischen Percarbonaten bestehen können und die Initiatoren auch in Mischung einsetzbar sind.

11. Verfahren nach Anspruch 1, dadurch gekennzeichnet, daß die Viskosität der Dispersionen in Abhängigkeit vom pH-Wert in einem pH-Wertbereich zwischen 2 und 12 zwischen 10 mPa·s und 100 Pa·s eingestellt wird.

12. Verfahren nach Anspruch 1, dadurch gekennzeichnet, daß die erfindungsgemäßen Schutzkolloide bei der Dispersionsherstellung im Reaktionsgefäß ganz oder teilweise vorgelegt werden oder ganz oder teilweise während der Polymerisation kontinuierlich in Reinform oder in Mischung mit den Monomeren zudosiert werden und die Polymerisation bei Temperaturen bis zu 140 °C gegebenenfalls unter Druck durchgeführt wird.

13. Verfahren nach Anspruch 1, dadurch gekennzeichnet, daß die bei der Dispersionsherstellung eingesetzten Monomeren im Reaktionsgefäß ganz oder teilweise vorgelegt werden oder ganz oder teilweise während der Polymerisation kontinuierlich oder diskontinuierlich in Reinform oder in Mischung zudosiert werden.

14. Wäßrige Dispersion mit pH-Wert abhängiger Viskosität, enthaltend Sulfonatgruppen-haltige Polyvinylacetale als Schutzkolloide, mindestens ein Latexpolymer, hergestellt durch Emulsionspolymerisation in Gegenwart des Sulfonatgruppenhaltigen Polyvinylacetals, gegebenenfalls weitere Schutzkolloide sowie gegebenenfalls Emulgatoren, dadurch gekennzeichnet, daß die Sulfonatgruppen-haltigen Polyvinylacetale Acetale Sulfonatgruppen-haltiger Polyvinylalkohole sind.

15. Wäßrige Dispersion nach Anspruch 14, dadurch gekennzeichnet, daß zumindest ein Teil der Sulfonatgruppen-haltigen Polyvinylacetale durch die zur Herstellung des Latexpolymers eingesetzten Monomere gepfropft ist.

16. Verwendung der wäßrigen Dispersion nach Anspruch 14 zur Beschichtung oder zur Verklebung von Glas, Metallen, Holz, Papier, Naturfasern, mineralischen Materialien und Polymersubstraten.

17. Verwendung der wäßrigen Dispersion nach Anspruch 14 als Rheologiemodifizierungsmittel für wäßrige Lösungen und Dispersionen und als Bindemittel für feste Farben.

## Claims

1. A process for preparing dispersions stabilized with protective colloid using sulfonato-containing polyvinyl acetals as the protective colloid in the preparation of the dispersions, if desired in combination with additional emulsifiers or further protective colloids, characterized in that the sulfonato-containing polyvinyl acetals are acetals of sulfonato-containing polyvinyl alcohols.

2. The process as claimed in claim 1, characterized in that the sulfonato-containing polyvinyl acetals contain up to 70 mol % of vinyl alcohol units, up to 84 mol % of vinyl acetal units, up to 20 mol % of sulfonate units (-SO₃-) and up to 20 mol % of vinyl acetate units.

3. The process as claimed in claim 1, characterized in that the aldehydes used for acetalization of the polyvinyl alcohols or of the sulfonato-containing polyvinyl alcohols are aliphatic, aromatic or cycloaliphatic aldehydes having up to 20 carbon atoms.

4. The process as claimed in claim 1, characterized in that the aldehyde used for acetalization of the polyvinyl alcohols is butyraldehyde.

5. The process as claimed in claim 1, characterized in that the sulfonato-containing polyvinyl acetals are used in amounts of up to 25% by weight relative to the monomers used in the preparation of the dispersions.

6. The process as claimed in claim 1, characterized in that the emulsifiers which can be additionally used in combination with the sulfonato-containing polyvinyl acetals are used in amounts of up to 1.5% by weight relative to the monomers used and these emulsifiers are anionic or nonionic emulsifiers.

7. The process as claimed in claim 1, characterized in that the protective colloids which can be additionally used in combination with the sulfonato-containing polyvinyl acetals are used in amounts of up to 5% by weight relative to the monomers used.

8. The process as claimed in claim 1, characterized in that the monomers used individually or in a mixture in the preparation of the dispersions comprise vinyl carboxylates having 3 to 20 carbon atoms, N-vinylpyrrolidone and derivatives thereof, ethylenically unsaturated carboxylic acids, esters thereof, anhydrides thereof or amides thereof, α-olefins, acrylonitrile, styrene or styrene derivatives.

9. The process as claimed in claim 8, characterized in that the monomers used in the preparation of the dispersions comprise acrylic or methacrylic esters having 1 to 12 carbon atoms in the alcohol radical and the alcohol radical of the esters comprises linear or branched alkyl chains, cycloaliphatic or aromatic radicals which, if desired, may have been additionally modified with hydroxyl groups, halogen atoms or epoxy groups.

10. The process as claimed in claim 1, characterized in that the initiators usable in the preparation of the dispersions are used in amounts of up to 2% by weight relative to the monomers used and can comprise alkali metal salts and ammonium salts of peroxy acids, redox catalysts or organic peroxides, organic azo compounds or organic percarbonates and the initiators can also be used mixed.

11. The process as claimed in claim 1, characterized in that the viscosity of the dispersions is set between 10 mPa·s and 100 Pa·s as a function of the pH in the ph range between 2 and 12.

12. The process as claimed in claim 1, characterized in that in the preparation of the dispersions the protective colloids according to the invention are first introduced entirely or in part into the reaction vessel or are metered in continuously entirely or in part during polymerization in pure form or in a mixture with the monomers and the polymerization is carried out at temperatures of up to 140°C, if necessary under pressure.

13. The process as claimed in claim 1, characterized in that the monomers used in the preparation of the dispersions are first introduced entirely or in part into the reaction vessel or are metered in continuously or batchwise entirely or in part during polymerization in pure form or in a mixture.

14. An aqueous dispersion having a pH-dependent viscosity and containing sulfonato-containing polyvinyl acetals as protective colloids, at least one latex polymer prepared by emulsion polymerization in the presence of the sulfonato-containing polyvinyl acetal, if desired further protective colloids and, if desired, emulsifiers, characterized in that at the sulfonato-containing polyvinal acetals are acetals of sulfonato-containing polyvinal alchohols.

15. An aqueous dispersion as claimed in claim 14, characterized in that at least a portion of the sulfonato-containing polyvinyl acetals has undergone grafting with the monomers used for preparing the latex polymer.

16. Use of an agueous dispersion as claimed in claim 14 for coating or bonding glass, metals, wood, paper, natural fibers, mineral materials and polymer substrates.

17. Use of an aqueous dispersion as claimed in claim 14 as rheology modifier for aqueous solutions and dispersions and as binder for solid colors.

## Revendications

1. Procédé de préparation de dispersions stabilisées par un colloïde protecteur en utilisant des polyvinylacétals contenant des groupes sulfonates comme colloïde protecteur pour la préparation de la dispersion, éventuellement en combinaison avec des agents émulsionnants ou d'autres colloïdes protecteurs supplémentaires, caractérisé en ce que les polyvinylacétals contenant des groupes sulfonates sont des acétals d'alcools polyvinyliques contenant des groupes sulfonates.

2. Procédé selon la revendication 1, caractérisé en ce que les polyvinylacétals contenant des groupes sulfonates contiennent jusqu'à 70% en mole de motifs alcool vinylique, jusqu'à 84% en mole de motifs vinylacétal, jusqu'à 20% en mole de motifs sulfonate (-SO₃⁻) et jusqu'à 20% en mole de motifs acétate de vinyle.

3. Procédé selon la revendication 1, caractérisé en ce que les aldéhydes utilisés pour l'acétalisation des alcools polyvinyliques ou des alcools polyvinyliques contenant des groupes sulfonates sont des aldéhydes aliphatiques, aromatiques ou cycloaliphatiques avec jusqu'à 20 atomes de carbone.

4. Procédé selon la revendication 1, caractérisé en ce que l'aldéhyde utilisé pour l'acétalisation des alcools polyvinyliques est le butyraldéhyde.

5. Procédé, selon la revendication 1, caractérisé en ce que les polyvinylacétals contenant des groupes sulfonates sont utilisés en quantités jusqu'à 25% en poids par rapport aux monomères utilisés pour la préparation de la dispersion.

6. Procédé selon la revendication 1, caractérisé en ce que les agents émulsionnants utilisables en supplément en combinaison avec les polyvinylacétals contenant des groupes sulfonates sont utilisés en quantités jusqu'à 1,5% en poids par rapport aux monomères mis en oeuvre et en ce que ces agents émulsionnants sont des agents émulsionnants anioniques ou non ioniques.

7. Procédé selon la revendication 1, caractérisé en ce que les colloïdes protecteurs utilisables en supplément en combinaison avec les polyvinylacétals contenant des groupes sulfonates sont utilisés en quantités jusqu'à 5% en poids par rapport aux monomères mis en oeuvre.

8. Procédé selon la revendication 1, caractérisé en ce que les monomères utilisés seuls ou en mélange pour la préparation de la dispersion sont constitués d'esters vinyliques d'acide carboxyliques avec 3 à 20 atomes de carbone, de N-vinylpyrrolidone et de ses dérivés, d'acides carboxyliques éthyléniquement insaturés, de leurs esters, de leurs anhydrides et de leurs amides, d'α-oléfines, de l'acrylonitrile, du styrène ou des dérivés du styrène.

9. Procédé selon la revendication 8, caractérisé en ce que les monomères utilisés pour la préparation de la dispersion sont constitués d'esters de l'acide acrylique ou méthacrylique avec 1 à 12 atomes de carbone dans le résidu alcool, et en ce que le résidu alcool des esters est constitué de chaînes alkyle linéaires ou ramifiées, de radicaux aromatiques ou cycloaliphatiques, qui sont éventuellement modifiés en outre avec des groupes hydroxyle, des atomes d'halogène ou des groupes époxyde.

10. Procédé selon la revendication 1, caractérisé en ce que les initiateurs utilisables pour la préparation de la dispersion sont utilisés en quantités jusqu'à 2% en poids par rapport aux monomères mis en oeuvre et peuvent être constitués de sels alcalins et d'ammonium des peroxyacides, de catalyseurs redox ou de peroxydes organiques, de composés azoïques organiques ou de percarbonates organiques et en ce que les initiateurs sont utilisables aussi en mélange.

11. Procédé selon la revendication 1, caractérisé en ce que la viscosité des dispersions est ajustée entre 10 mPa·s et 100 Pa·s, en fonction de la valeur du pH dans un domaine de valeur de pH compris entre 2 et 12.

12. Procédé selon la revendication 1, caractérisé en ce que les colloïdes protecteurs selon l'invention pour la préparation de la dispersion sont placés initialement totalement ou partiellement dans le réacteur ou sont ajoutés totalement ou partiellement en continu pendant la polymérisation sous forme pure ou en mélange avec les monomères et en ce que la polymérisation est conduite à des températures jusqu'à 140°C éventuellement sous pression.

13. Procédé selon la revendication 1, caractérisé en ce que les monomères utilisés pour la préparation de la dispersion sont placés initialement totalement ou partiellement dans le réacteur ou sont ajoutés totalement ou partiellement de manière continue ou discontinue pendant la polymérisation sous forme pure ou en mélange.

14. Dispersion aqueuse avec une viscosité fonction de la valeur du pH, contenant des polyvinylacétals contenant des groupes sulfonates comme colloïdes protecteurs, au moins un polymère de latex, préparée par polymérisation en émulsion en présence du polyvinylacétal contenant des groupes sulfonates, éventuellement d'autres colloïdes protecteurs et éventuellement des agents émulsionnants, caractérisée en ce que les polyvinylacétals contenant des groupes sulfonates sont des acétals d'alcools polyvinyliques contenant des groupes sulfonates.

15. Dispersion aqueuse selon la revendication 14, caractérisée en ce qu'au moins une partie des polyvinylacétals contenant des groupes sulfonates est greffée avec les monomères utilisés pour la préparation du polymère de latex.

16. Utilisation de la dispersion aqueuse selon la revendication 14 pour revêtir ou pour coller du verre, des métaux, du bois, du papier, des fibres naturelles, des matériaux minéraux et des substrats polymères.

17. Utilisation de la dispersion aqueuse selon la revendication 14 comme agent de modification de rhéologie pour des solutions et dispersions aqueuses et comme liant pour des couleurs solides.
